Europäisches Patentamt

European Patent Office

Office européen des brevets

(19)

(11) Veröffentlichungsnummer: **0 058 296**
**B1**

(12)
# EUROPÄISCHE PATENTSCHRIFT

(45) Veröffentlichungstag der Patentschrift:
27.03.85

(21) Anmeldenummer: 82100241.7

(22) Anmeldetag: 14.01.82

(51) Int. Cl.⁴: **C 07 C 113/00, G 01 N 7/00**

(54) **Verfahren zur Steuerung chargenweise durchgeführter Diazotierungsreaktionen.**

(30) Priorität: 07.02.81 DE 3104375

(43) Veröffentlichungstag der Anmeldung:
25.08.82 Patentblatt 82/34

(45) Bekanntmachung des Hinweises auf die Patenterteilung:
27.03.85 Patentblatt 85/13

(84) Benannte Vertragsstaaten:
**CH DE FR GB IT LI**

(56) Entgegenhaltungen:
**DE - C - 960 205**
**FR - A - 2 309 517**
**FR - A - 2 320 937**
**FR - A - 2 342 495**

(73) Patentinhaber: **HOECHST AKTIENGESELLSCHAFT,
Postfach 80 03 20, D-6230 Frankfurt am Main 80 (DE)**

(72) Erfinder: **Karrenbauer, Kurt, Dr., Lange Heide 38,
D-5042 Erftstadt (DE)**
Erfinder: **Behringer, Hartmut, Dr., Rotdornweg 6,
D-5042 Erftstadt (DE)**
Erfinder: **Rehberg, Heinrich, Dr., Volkerstrasse 3,
D-5030 Hürth-Hermülheim (DE)**

**Beschreibung**

Die Herstellung von Diazoniumsalzen oder Bisdiazoniumsalzen erfolgt durch Umsetzung eines primären aromatischen Amins mit salpetriger Säure oder z. B. mit Natriumnitrit in Gegenwart von Säuren.

Wegen der Instabilität vieler Diazoniumsalze wird oft bei Temperaturen von 0° bis 15°C gearbeitet und die Reaktionswärme durch Kühlung abgeführt. Am Endpunkt der Diazotierungsreaktion kann ein geringer Überschuß von salpetriger Säure vorhanden sein, der gerade noch eine leichte Blaufärbung auf einem Jodkalium-Stärkepapier bewirkt.

Überschüssige salpetrige Säure kann durch weitere Zugabe kleiner Mengen frischen Amins verbraucht werden, was man als Ausbalancieren« bezeichnet, oder man kann die salpetrige Säure durch Harnstoff oder Aminosulfonsäure zerstören.

Die Anwesenheit überschüssiger salpetriger Säure in der Diazoniumsalzlösung ist meist von Nachteil für die Stabilität der Diazoniumsalze sowie bei der Verwendung von Diazoniumsalzen zur Herstellung von Azo-Farbstoffen und Azo-Pigmenten durch Kupplungsreaktionen.

Zur Vereinfachung der Endpunktsfindung wie auch zur Steuerung eines optimalen Überschusses an salpetriger Säure während der oft mehrere Stunden dauernden Reaktionsphase bei Umsetzungen in technischem Maßstab sind eine Reihe von Verfahren entwickelt worden, um den Gehalt an salpetriger Säure in der Reaktionslösung zu bestimmen.

Diese Verfahren beruhen auf der Messung des Redox-Potentials bzw. Gesamtpotentials mittels einer Platin-Kalomel-Meßkette (DE-C-960 205), auf einer polarovoltischen Kontrolle der Nitritdosierung (DE-A-2 635 778 = FR-A-2 320 937) oder auf der Anwendung eines Analysators, welcher die Konzentration der salpetrigen Säure im Reaktionsgemisch angibt (DE-A-2 617 917).

Allen Messungen in der Diazoniumsalzlösung haftet jedoch als Nachteil an, daß noch nicht umgesetztes Amin die Messung durch Verstopfen der Zuführungsleitungen eines zu messenden Teilstromes und durch chemische Nebenreaktionen beeinträchtigt.

Weiterhin bilden Beläge auf Elektroden durch zersetztes Diazoniumsalz Fehlpotentiale. Auch werden die Potentiale durch die Abnahme der Konzentration der Reaktionsteilnehmer am Endpunkt der Umsetzung gering und daher die Endpunktsfindung schwierig.

Schließlich beschreibt die FR-A-2 342 495 (= DE-OS 2 708 585) ein Verfahren zum Nachweisen eines in einer Flüssigkeit in Lösung befindlichen elektroaktiven flüchtigen Stoffes, wobei die Flüssigkeit mit einem Inertgasstrom mit dem Elektrolyten einer auf das Vorhandensein eines elektroaktiven flüchtigen Stoffes ansprechenden elektromechanischen Nachweisvorrichtung in Berührung gebracht wird. Dieses Verfahren wird auch für die Diazotierung von Anilin vorgeschlagen, ist jedoch bei aromatischen Aminen, die in wässerigen Systemen weniger löslich sind als Anilin, unzuverlässig, da bei diesen nicht die Zugabe von Natriumnitritlösung, sondern ihre Teilchengröße und damit ihre Lösegeschwindigkeit für die Diazotierung geschwindigkeitsbestimmend sind.

Überraschend wurde gefunden, daß die mit der salpetrigen Säure in der Diazoniumsalulösung im konzentrationsabhängigen Gleichgewicht stehenden, im Gasraum über dieser Lösung vorhandenen nitrosen Gase ein einfaches und zuverlässiges Indiz zur Steuerung der Diazotierung wie auch zur Endpunktbestimmung darstellen.

Überraschenderweise wurde weiterhin gefunden, daß kleinste Veränderungen der Konzentration an salpetriger Säure, z. B. um 0,03%, auch im Bereich niedriger Gesamtkonzentrationen an salpetriger Säure von z. B. kleiner als 0,1%, wie sie bei der Diazotierung von in wässerigen Systemen schwerlöslichen aromatischen Aminen besonders am Reaktionsende üblich sind, leicht meßbare Veränderungen in der Größe von ca. 30 ppm $NO_x$ (x = Bruchzahl zwischen 1 und 2) über dem Reaktionsraum erzeugen, wenn durch einen Rührer für eine gleichmäßige Konzentration an allen Stellen der zu messenden Lösung sowie für eine ständige Erneuerung der Oberfläche gesorgt wird. Auch eine kleine Veränderung der Konzentration an salpetriger Säure bewirkt sekundenschnell eine Veränderung des Gehaltes an nitrosen Gasen im Gasraum über der Lösung, die dem Stand der Technik entsprechend sofort gemessen und registriert werden kann. Dadurch ist es möglich, den Fortgang der Reaktion automatisch so zu steuern, daß nur geringe, gleichmäßige Überschüsse an salpetriger Säure in der Reaktionslösung aufrecht erhalten zu werden brauchen, so daß die Umwelt durch nitrose Gase nur minimal belastet wird und die Reaktion mit der höchstmöglichen Genauigkeit zu Ende geführt werden kann. Auf diese Weise werden bei langsam diazotierbaren Aminen wie 5-Nitro-2-aminoanisol oder 3-Nitro-4-aminotoluol größere Überschüsse an salpetriger Säure vermieden und dennoch ausreichende Diazotierungsgeschwindigkeiten und hohe Ausbeuten erzielt.

Beim Verfahren der Erfindung wird nicht nur die Konzentration der nitrosen Gase im Gasraum über der Reaktionszone gemessen, sondern auch die Abnahme des Gehaltes an nitrosen Gasen im Gasraum in Abhängigkeit von der Zeit, da bei der chargenweisen Reaktionsführung am Ende der Reaktion die Diazotierungsgeschwindigkeit infolge der Abnahme der Aminkonzentration in dem Ansatzbehälter geringer wird. Wird bei portionsweiser Zugabe von Natriumnitrit zum Diazotierungsansatz eine festgelegte Zeit des Konzentrationsabfalls an nitrosen Gasen von einem festgelegten oberen zu einem festgelegten unteren Wert überschritten, bedeutet dies, daß kaum eine Diazotierungsreaktion erfolgt und die Reaktion praktisch beendet ist. Durch Einhalten solcher festgelegten Grenzwerte kann die Ausbeute gesteigert werden, wodurch die umweltfreundliche Beseitigung der nicht umgesetzten Anteile einer Diazotierung erleichtert wird.

Im einzelnen betrifft die Erfindung nunmehr ein Verfahren zur Steuerung chargenweise durchgeführter Diazotierungsreaktionen, welches dadurch gekennzeichnet ist, daß man die Luft über der durch kräftige Durchmischung ständig erneuerten Oberfläche des Reaktionsansatzes, welcher 5-Nitro-2-aminoanisol oder 3-Nitro-4-aminotoluol als aromatisches Amin und salpetrige Säure enthält, mit konstanter Geschwindigkeit absaugt, den Gehalt der abgesaugten Luft an durch teilweise Zersetzung von salpetriger Säure gebildeten nitrosen Gasen mißt und die Zufuhr salpetriger Säure oder eines diese unter den Reaktionsbedingungen bildenden gelösten Stoffes zum vorgelegten Amin automatisch unterbricht, wenn der Gehalt der abgesaugten Luft an nitrosen Gasen einen vorwählbaren oberen Grenzwert zwischen 75 und 300 ppm erreicht, und automatisch wieder freigibt, wenn der Gehalt der abgesaugten Luft an nitrosen Gasen einen vorwählbaren unteren Grenzwert zwischen 5 und 45 ppm erreicht, wobei der Endpunkt der Diazotierung des aromatischen Amins durch ein für dieses Amin spezifisches Zeitintervall von 1 bis 30 Minuten angezeigt wird, welches beim Abfall der Konzentration der nitrosen Gase vom oberen bis zum unteren Grenzwert durchlaufen wird.

Das Verfahren der Erfindung kann weiterhin wahlweise und bevorzugt dadurch gekennzeichnet sein, daß

a) man die Zufuhr der salpetrigen Säure oder eines diese unter den Reaktionsbedingungen bildenden gelösten Stoffes automatisch teilweise freigibt, wenn der obere Grenzwert wieder unterschritten wird und völlig freigibt, wenn der untere Grenzwert erreicht ist,

b) man den oberen Grenzwert bei 100 ppm, den unteren Grenzwert bei 10 ppm und ein Zeitintervall beim Abfall vom oberen zum unteren Grenzwert von 3 bis 30 Minuten als Endpunkt der Diazotierung festlegt;

c) die Dauer der Zuführung der salpetrigen Säure oder eines diese unter den Reaktionsbedingungen bildenden gelösten Stoffes 10 Minuten bis 6 Stunden beträgt;

d) man als salpetrige Säure bildenden Stoff eine wäßrige Lösung von Natriumnitrit einsetzt;

e) man lediglich in einem Teilstrom der über dem Reaktionsansatz abgesaugten Luft den Gehalt an nitrosen Gasen mißt.

## Beispiel 1

336 g 5-Nitro-2-aminoanisol (2,0 Mol) werden

in 3000 l Wasser mit 530 l Salzsäure (31%ig) suspendiert. Die Suspension wird durch Eiszugabe auf + 5°C abgekühlt und mit insgesamt 264 l einer 40prozentigen Lösung von Natriumnitrit in Wasser (Einlaufgeschwindigkeit 400 l/h) versetzt. Die Temperatur wird dabei durch weitere Eiszugabe zwischen + 5°C und + 7°C gehalten. Der Behälterinhalt wird während der Diazotierung kräftig durchmischt. Die über dem Behälter befindliche Luftschicht wird mit einer Geschwindigkeit von 2000 m$^3$/h abgesaugt. In diesem abgesaugten Luftstrom wird der Gehalt an nitrosen Gasen — bestimmt als NO$_2$ — gemessen. Sobald ein Wert von 80 ppm überschritten wird, unterbindet eine Steuerung den weiteren Zulauf der Natriumnitritlösung. Fällt der Gehalt an nitrosen Gasen in der Abluft auf Werte unterhalb von 40 ppm, so fließt weiterhin Natriumnitritlösung in den Reaktionsbehälter. Dauert der Abfall im Gehalt an nitrosen Gasen von 80 ppm auf 40 ppm länger als 15 Minuten, so ist die Reaktion beendet und eine vollständige Diazotierung erreicht. Die Ausbeute beträgt dabei nahezu 100%, die Gesamtzeit ca. 2 Stunden.

In der Diazoniumsalzlösung ist nur ein schwacher Natriumnitritüberschuß nachweisbar, was die Lösung nach Filtration zur Kupplungsreaktion geeignet macht.

## Beispiel 2

1600 kg 3-Nitro-4-aminotoluol werden in 2500 l Wasser und 3300 l Salzsäure (31%ig) suspendiert, durch Eiszugabe auf 8—10°C abgekühlt und durch Zulauf von Natriumnitritlösung (40%ig) diazotiert.

Zu Beginn der Diazotierungsreaktion werden 150 l der Natriumnitritlösung mit einer Einlaufgeschwindigkeit von 500 l/h zugegeben, die nächsten 1100 l mit einer Einlaufgeschwindigkeit von 1000 l/h und der Rest mit einer Einlaufgeschwindigkeit von 250 l/h. Während der Reaktion wird der Behälterinhalt kräftig gerührt und die Temperatur durch weitere Eiszugabe unterhalb von 10°C gehalten. Die über der Flüssigkeitsoberfläche befindliche Luft wird in einem Strom von 2500 m$^3$/h abgesaugt; in einem Teilstrom wird der Anteil an nitrosen Gasen, bestimmt als NO$_2$, festgestellt.

Sobald der Gehalt an nitrosen Gasen über den Wert von 80 ppm ansteigt, wird der Zulauf der Natriumnitritlösung unterbrochen. Sobald der Wert unter 80 ppm fällt, wird der Zulauf wieder geöffnet, um bei einem Gehalt von 40 ppm die vorgegebene Einlaufgeschwindigkeit zu erreichen. Wird das Zulaufventil on der Endphase der Reaktion ganz geschlossen, weil die Reaktionsgeschwindigkeit infolge der niedrigen Konzentration der Reaktionsteilnehmer sehr gering wird, so bestimmt nunmehr die Zeit, welche benötigt wird, einen Abfall der Konzentration der nitrosen Gase in der Abluft von 80 ppm auf 40 ppm zu bewirken, das Reaktionsende. Beträgt der Zeitraum des Abfalls mehr als 25 Minuten, so ist die Reaktion praktisch beendet.

Nach 6 Stunden werden 1385 l Natriumnitritlösung verbraucht und das ungemahlene 3-Nitro-4-aminotoluol zu 99% diazotiert.

## Patentansprüche

1. Verfahren zur Steuerung chargenweise durchgeführter Diazotierungsreaktionen, dadurch gekennzeichnet, daß man die Luft über der durch kräftige Durchmischung ständig erneuerten Oberfläche des Reaktionsansatzes, welcher 5-Nitro-2-aminonisol oder 3-Nitro-4-aminotoluol als aromatisches Amin und salpetrige Säure enthält, mit konstanter Geschwindigkeit absaugt, den Gehalt der abgesaugten Luft an durch teilweise Zersetzung von salpetriger Säure gebildeten nitrosen Gasen mißt und die Zufuhr salpetriger Säure oder eines diese unter den Reaktionsbedingungen bildenden gelösten Stoffes zum vorgelegten Amin automatisch unterbricht, wenn der Gehalt der abgesaugten Luft an nitrosen Gasen einen vorwählbaren oberen Grenzwert zwischen 75 und 300 ppm erreicht, und automatisch wieder freigibt, wenn der Gehalt der abgesaugten Luft an nitrosen Gasen einen vorwählbaren unteren Grenzwert zwischen 5 und 45 ppm erreicht, wobei der Endpunkt der Diazotierung des aromatischen Amins durch ein für dieses Amin spezifisches Zeitintervall von 1 bis 30 Minuten angezeigt wird, welches beim Abfall der Konzentration der nitrosen Gase vom oberen bis zum unteren Grenzwert durchlaufen wird.

2. Verfahren nach Anspruch 1, dadurch gekennzeichnet, daß man die Zufuhr der salpetrigen Säure oder eines diese unter den Reaktionsbedingungen bildenden gelösten Stoffes automatisch teilweise freigibt, wenn der obere Grenzwert wieder unterschritten wird und völlig freigibt, wenn der untere Grenzwert erreicht ist.

3. Verfahren nach Anspruch 1 oder 2, dadurch gekennzeichnet, daß man den oberen Grenzwert bei 100 ppm, den unteren Grenzwert bei 10 ppm und ein Zeitintervall beim Abfall vom oberen zum unteren Grenzwert von 3 bis 30 Minuten als Endpunkt der Diazotierung festlegt.

4. Verfahren nach einem der Ansprüche 1—3, dadurch gekennzeichnet, daß die Dauer der Zuführung der salpetrigen Säure oder eines diese unter den Reaktionsbedingungen bildenden gelösten Stoffes 10 Minuten bis 6 Stunden beträgt.

5. Verfahren nach einem der Ansprüche 1—4, dadurch gekennzeichnet, daß man als salpetrige Säure bildenden Stoff eine wäßrige Lösung von Natriumnitrit einsetzt.

6. Verfahren nach einem der Ansprüche 1—5, dadurch gekennzeichnet, daß man lediglich in einem Teilstrom der über dem Reaktionsansatz abgesaugten Luft den Gehalt an nitrosen Gasen mißt.

## Claims

1. Process for controlling diazotization reactions effected batchwise, which comprises vigorously agitating a reaction batch containing 5-nitro-2-aminoanisole or 3-nitro-4-aminotoluene as an aromatic amine and nitrous acid and thereby continuously renewing the surface area of the batch; exhausting the air above said surface area at a constant rate; testing the exhausted air for its content of nitrous gases originating from partially decomposed nitrous acid and automatically arresting the supply, to the amine, of nitrous acid or dissolved matter forming the acid under the reaction conditions once the content of nitrous gases in the exhausted air has reached a preselected upper limiting value between 75 and 300 ppm and automatically resuming the supply once the content of nitrous gases in the exhausted air has reached a preselected lower limiting value between 5 and 45 ppm, the end point of the diazotization of the aromatic amine being indicated by a time interval of 1 to 30 minutes, which is typical of the respective amine and during which the concentration of the nitrous gases decreases from the upper limiting value to the lower limiting value.

2. Process as claimed in claim 1, wherein the supply of nitrous acid or dissolved matter forming the acid under the reaction conditions is automatically resumed partially once the contant of nitrous gases in the exhausted air is below the upper limiting value and resumed completely once the lower limiting value has been reached.

3. Process as claimed in claim 1 or 2, wherein the upper limiting value is 100 ppm, the lower limiting value is 10 ppm, and the time intervall determining the end point of the diazotization, during which the concentration decreases from the upper limiting value to the lower limiting value, is 30 to 20 minutes.

4. Process as claimed in any of claims 1—3, wherein the nitrous acid or dissolved matter forming it under the reaction conditions is supplied over a period of 10 Minutes to 6 hours.

5. Process as claimed in any of claims 1—4, wherein an aqueous solution of sodium nitrite is used as the matter forming nitrous acid.

6. Process as claimed in any of claims 1—5, wherein the content of nitrous gases is tested in merely a portion of the air exhausted above the reaction batch.

## Revendications

1. Procédé de réglage de réactions de diazotation effectuées en discontinu, caractérisé en ce que l'on évacue par aspiration à vitesse constante l'air au-dessus de la surface renouvelée en continu par agitation vigoureuse de la charge réactionnelle contenant du nitro-5-amino-2-anisole ou de nitro-3-amino-4-toluène comme amine aromatique et de l'acide nitreux, on mesure dans l'air aspiré la teneur en gaz no- treux formés par décomposition partielle de l'acide nitreux, on arrête automatiquement l'apport d'acide nitreux ou de substance dissoute le formant dans les conditions réactionelles aussitôt que la teneur en gaz nitreux dans l'air évacué a atteint une valeur limite supériere qui peut être présélectionnée entre 75 et 300 ppm et on reprend automatiquement l'apport aussitôt que la teneur en gaz nitreux dans l'air évacué a atteint une valeur limite inférieure qui peut être présélectionnée entre 5 et 45 ppm, le point final de la diazotation de l'amine auromatique étant indiqué par un intervalle de temps spécifique pour cette amine de 1—30 min, qui s'écoule pendant que la concentration des gaz nitreux diminue de la valeur limite supérieure à la valeur limite inférieure.

2. Procédé selon la revendication 1, caractérisé en ce que l'on reprend partiellement et automatiquement l'apport de l'acide nitreux ou de la substance dissoute le formant dans les conditions réactionelles aussitôt que la valeur limite supérieure est à nouveau dépassée vers le bas et on le reprend complètement aussitôt que la valeur limit inférieure est atteinte.

3. Procédé selon la revendication 1 ou 2, caractérisé en ce que l'on fixe à 100 ppm la valeur limite supérieure, à 10 ppm la valeur limite inférieure et à 3—10 min l'intervalle de temps pour l'abaissement de la valeur limite supérieure à la valeur limite inférieure, comme point final de la diazotation.

4. Procédé selon l'une des revendications 1—3, caractérisé en ce que l'on apporte l'acide nitreux ou la substance dissoute le formant dans les conditions réactionnelles pendant une durée de 10 min à 6 h.

5. Procédé selon l'une des revendications 1 à 4, caractérisé en ce que l'in tuilise comme substande formant l'acide nitreux une solution aqueuse de nitrite de sodium.

6. Procédé selon l'une des revendications 1—5, caractérisé en ce que l'on ne mesure la teneur en gaz nitreux que dans un courant partiel de l'air évacué par aspiration au-dessus de la charge réactionnelle.